# EUROPEAN PATENT APPLICATION

(11) **EP 0 879 553 A2**
(43) Date of publication of application: **25.11.1998**
(21) Application number: 98303780.5
(22) Date of filing: 14.05.1998
(51) Int. Cl.: A01G 3/053

(54) **Hedge trimmer**

(30) Priority: 23.05.1997 GB 9710638
(71) Applicant: Black & Decker Inc., Newark Delaware 19711 (US)
(72) Inventor: Webster, Craig, Jesmond, Newcastle-upon-Tyne (GB)
(74) Representative: Stagg, Diana Christine

(57) **Abstract**

A hand held battery powered tool for cutting vegetation such as a hedge trimmer comprising an elongate rod (1), a battery pack (2) attachable at one end of the elongate rod (1), an electric motor (4) pivotally attached to the other end of the elongate rod (1) and which is in electrical contact with the battery pack (2) and at least one cutting blade (18) which extends from and is driven by the motor (4). The weight of the battery pack (2) at one end of the rod (1) acts to counterbalance the weight of the electrical motor (4) and the blades (18) at the other end of the rod when the cutting tool is held by a user. A support handle (3) is located in the neighbourhood of the centre of gravity of the cutting tool.

## Description

The present invention relates to an electrically powered tool for cutting vegetation and in particular, to a hedge trimmer having a pair of co-operating blades at least one of which reciprocates, and even more particularly to a hedge trimmer having the electric motor and co-operating blades mounted on an elongate rod distant from a user when the hedge trimmer is in use.

Electrically powered hedge trimmers having two co-operating blades at least one of which is driven in a reciprocating fashion are known in the art. Such trimmers comprise a body in which is housed an electrical motor. Two cutting blades which co-operate with each other in a known manner are attached to and project from the body of the hedge trimmer. The electric motor reciprocatingly drives at least one of the blades via a system of gears and an eccentric drive system. At least one handle is located on the body of the hedge trimmer to enable a user to support the hedge trimmer. An electric switch is provided on the handle which enables a user to switch on the hedge trimmer by depressing the switch in order to activate the electric motor.

The problem with known hedge trimmers is that the cutting range of the hedge trimmer in relation to the user when in use is relatively small. As such, this can provide problems for a user when the user wishes to trim an object which is a greater distance than arms length. For example, a user may wish to trim branches which are high up in a tree or which form part of the top of a tall bush or hedge. In such circumstances, a user would require the assistance of a ladder or stool in order to be able to reach the top of the tree, bush or hedge. Furthermore, as the position of the longitudinal axis of the blades is fixed in relation to the body of the hedge trimmer, the user has to angle the whole of the hedge trimmer in relation to the object to be cut. This can be awkward when the user is trying to trim objects which are high up, particularly when standing on a ladder or stool.

The above problems associated with hedge trimmers are also applicable to other types of electrically powered garden tools such as shearers and cutters. It is therefore desirable to have an electrically powered tool for cutting vegetation which is able to cut objects which are relatively distant from where the user is standing. It is further desirable to be able to angle the cutting blades of the electrically powered tool relative to the object to be cut without having to angle the whole of the tool.

GB2,266,682 discloses a device which enables a user to operate a standard power tool, in particular, a hedge trimmer at a distance from the user. The device comprises a pole having a cradle pivotally attached to one end of the pole which is capable of releasably holding a power tool such as a hedge trimmer. At the opposite end of the pole to the cradle is attached a counter weight to provide a counter balance to the weight of a power tool when held in the cradle. A support handle is provided on the pole on which is mounted an electrical switch. A cable extends from the switch on the handle which is attachable to a mains power supply. A second electrical cable runs from the switch on the handle to a connector which attaches to the plug of the power tool. The user is able to activate the power tool by switching the mains power supply to the tool on and off by depressing the switch on the handle. The cradle is able to be pivoted relative to the pole by the movement of a lever pivotally attached to the pole and which is mechanically linked to the cradle.

The device disclosed in GB2,266,682 suffers from a number of problems. Firstly, a whole power tool has to be held by the cradle. This creates unnecessary excess weight due to additional features which are present on the power tool but which are not required when the power tool is held by the cradle. Secondly, the user must override any safety features of the power tool which are intended to ensure that the user of such a power tool holds the tool by its handle when the tool blades are cutting. Thirdly, the device has a mains cable attached. This leads to the potential problem of the user severing the electric cable. It also restricts the places where the device can be used.

It is therefore the object of the present invention to provide an electrically powered tool for cutting vegetation, such as a hedge trimmer, which is able to cut objects which are relatively distant from the user. It is a further object of the present invention to provide an electrically powered tool which has cutting blades which are able to be angled relative to the body of the tool. An additional object of the present invention to provide a hedge trimmer which has no electrical mains power cable.

According to the first aspect of the present invention there is provided a hand held battery powered tool for cutting vegetation comprising:
- an elongate rod;
- a battery pack attachable (NB This can be removed for charging) to one end of the elongate rod;
- an electric motor pivotally attached to the other end of the elongate rod which motor is in electrical contact with the battery pack; and
- at least one cutting blade which extends from and is driven by the motor.

By having the cutting tool powered by a battery pack, it avoids the need for an electrical cable to connect the cutting tool to a mains power supply. This prevents any problems with the user accidentally severing the power cable. It also enables the user to use the cutting tool in places where there are no mains power supplies available. By mounting the cutting blade on the end of an elongate rod, the cutting tool has a large cutting range. Preferably, the motor drives at least one hedge trimmer blade in a reciprocating movement. By using reciprocating driven hedge trimmer blades, the cutting tool can be used as a hedge trimmer.

Preferably the axis of pivot of the electrical motor is parallel to the plane of the reciprocating blade.

Preferably, the weight of the battery pack at one end of the rod acts to counterbalance the weight of the electric motor and the blade at the other end of the rod when the cutting tool is held by a user. This makes the cutting tool easy to use as it is balanced and therefore easily controllable. Ideally, there is further provided at least one handle to ensure that a user supports the cutting tool in a position which is located in the neighbourhood of the centre of gravity of the cutting tool, so that a user supports the cutting tool at its centre of gravity.

One way of enabling a user to pivot the electric motor relative to the rod comprises a mechanical linkage located on the elongate rod between the electric motor and the handle which is configured so that the pivotal motion of the electric motor is dependent upon the movement of the handle. Ideally, the handle can slide axially along the rod so that the pivotal motion of the electric motor is dependent upon the sliding movement of the handle. Alternatively, the pivotal motion of the electric motor relative to the rod can be controlled by a second electric motor. In the third alternative, the electric motor is pivotally mounted about a bolt attached to the end of elongate member, so that the pivotal motion of the electric motor is hindered by the action of screwing a nut which screw threaded onto the bolt. Such a nut could comprise a wing nut which, as it is screwed onto the bolt sandwiches part of the motor between the nut and the end of the elongate member to hold the electrical motor firmly.

Preferably, the elongate rod is telescopic. This enables the length of the rod to be extended as required. In certain situations, it may be desirable to have the elongate rod of a certain length. However, in other situations the user may wish to have the elongate rod at of a differing length. Therefore, the user can extend or reduce the length of the elongate rod as required.

Preferably, the motor is capable of pivoting to a position where the blade is located in a folded back position alongside the elongate rod. This is a particularly beneficial feature as it enables the blade to be folded back out of the way when not in use, reducing the length of the cutting tool whilst keeping it compact in order for easy storage or transportation. The benefits of this feature are enhanced when it is used in conjunction with a telescopic elongate rod so that, when the cutting tool is stored away, the blade can be folded back and the length of the elongate rod minimised to produce a short compact tool.

When the blade is a hedge trimmer blade, ideally it folds back to a position where the blade is substantially parallel to the elongate rod. Hedge trimmer blades are long and relatively narrow. Therefore, the most compact shape is provided when the blades are folded back, located along side and parallel to the elongate rod.

According to the second aspect of the present invention there is provided a hand held battery powered tool for cutting vegetation characterised in that the cutting tool comprises an elongate rod, an electric motor pivotally attached to one end of the elongate rod, at least one cutting blade which extends from and is driven by the motor, wherein the motor is capable of pivoting to a position where the blade is located in a folded back position alongside the elongate rod. The ability to fold back the blade is a particularly beneficial feature as it enables the blade to be folded back out of the way when not in use, reducing the length of the cutting tool, whilst keeping it compact in order for easy storage or transportation.

The motor (4) can drive at least one hedge trimmer blade in a reciprocating movement.

Preferably, the hedge trimmer blade is substantially parallel to the elongate rod when located in the folded back position. Hedge trimmer blades are long and relatively narrow. Therefore, the most compact shape is provided when the blades are folded back, located along side and parallel to the elongate rod.

The axis of pivot of the electrical motor can be parallel to the plane of the blade.

The electric motor can be pivotally mounted about a bolt, which bolt is attached to the end of the elongate rod so that the pivotal motion of the electric motor is hindered by the action of tightening a nut which is screw threaded onto the bolt. Alternatively, there can be provided a mechanical linkage between the electric motor and a handle located on the elongate rod and configured so that the pivotal motion of the electric motor is dependent upon the movement of the handle. The handle may be axially slidable along the elongate rod and configured so that the pivotal motion of the electric motor is dependent upon the sliding movement of the handle.

The pivotal motion of the electric motor relative to the rod can be controlled by a second electric motor.

Preferably the elongate rod is telescopic.

Two embodiments will now be described with reference to the accompanying drawings of which:
Figure 1 shows a side view of a battery powered hedge trimmer according to a first embodiment of the present invention;
Figure 2 shows a cross sectional view of the sliding handle according to the first embodiment of the present invention;
Figure 3 shows an alternative pivoting mechanism for first embodiment of the present invention;
Figure 4a to 4d show four side views of a battery powered hedge trimmer according to a second embodiment of the present invention; and
Figure 5 shows a view of the pivot connection according to the second embodiment of the present invention.

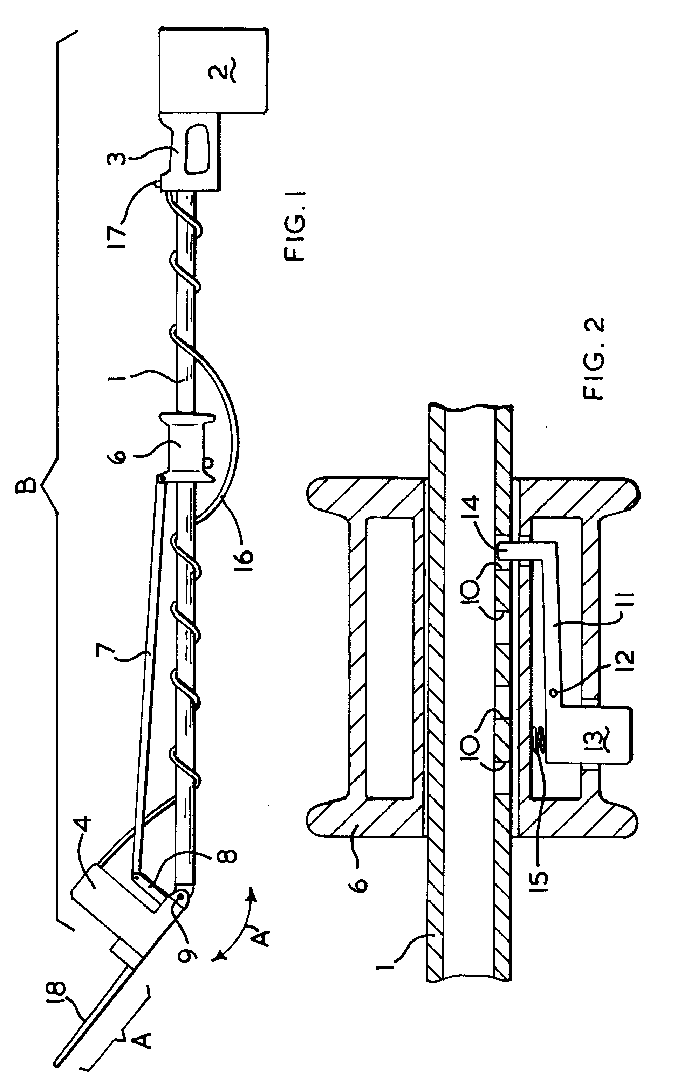

Figures 1 and 2 show the first embodiment of the invention. The hedge trimmer shown in Figures 1 and 2 comprise a pair of hedge trimmer blades (A) which together with an elongate body (B) form a hand held battery powered hedge trimmer. The hand held battery powered hedge trimmer comprises an elongate rod 1 formed from a metal tube having a battery pack (2) attached to one of its ends. The battery pack (2) is located within a moulded plastic casing which additionally forms a support handle (3) by which a user can support the hedge trimmer. At the other end of the elongate rod (1) there is provided an electric motor (4) which is pivotally mounted about a pivot axis (9). Attached to the electric motor (4) are a pair of blades (18), one of which is reciprocatingly driven via a system of gears and an eccentric drive by the electric motor (4) in a known fashion. Part way along the length of the elongate rod (1) is a sliding handle (6) which is able to slide axially along part of the length of the elongate rod (1). The sliding handle (6) is attached to the electric motor (4) via two metal bars (7, 8). The metal bars (7, 8) are configured so that when the sliding handle (6) is moved back and forth by a user as indicated by arrow B along the elongate rod (1), the electric motor (4) together with the pair of blades (18) pivot about axis (9) at the end of the elongate rod (1) as indicated by arrow A. Figure 2 shows a series of holes (10) which are located along the length of the part of the elongate road (1) where the sliding handle (6) is able to slide. Within the handle (6) is a catch (11) which is pivotally mounted about axis (12) within the sliding handle (6). An actuator (13) is provided on the catch (11) which protrudes outwardly through a hole in the sliding handle (6). A peg (14) is also provided on the catch (11) which protrudes inwardly through a hole in the sliding handle (6). The catch (11) is biased by a spring (15) into a position in which both the actuator (13) and the peg project from the sliding handle (6) to their maximum extent. As the user slides the sliding handle (6) along the elongate rod (1), the peg (14) engages one of the holes (10) and thus prevents the sliding handle (6) from sliding further in either direction. By locking the sliding handle (6) in a set position, the electrical motor (4) and pair of blades (18) are locked at a set angle of pivot relative to the rod (1). By having a plurality of holes (10), a number of preset angles of pivot can be set. The peg (14) of catch (11) can be disengaged from a hole (10) by depressing the actuator (13) causing the catch (11) to pivot and thus withdraw the peg from the hole (10). The user is then able to freely slide the sliding handle (6) and thus adjust the angle of pivot of the blades (18) whilst the actuator (13) is depressed.

The electric motor (4) is connected to the battery pack (2) via an electric cable (16) and an electric switch (17). The user supports the hedge trimmer by holding both the support handle (3) and the sliding handle (6).

In use, the user first depresses the actuator (13) on the sliding handle (6) and slides it to a position so that the cutting blades (18) are at a desired angle to the elongate rod (1), and then releases the switch (13). The peg (14) of the catch (11) engages a hole (10) thus locking the sliding handle (6) and thus blades (18) in position. The user then depresses the electric switch (17) to activate the electric motor (4) which drives the blades (18).

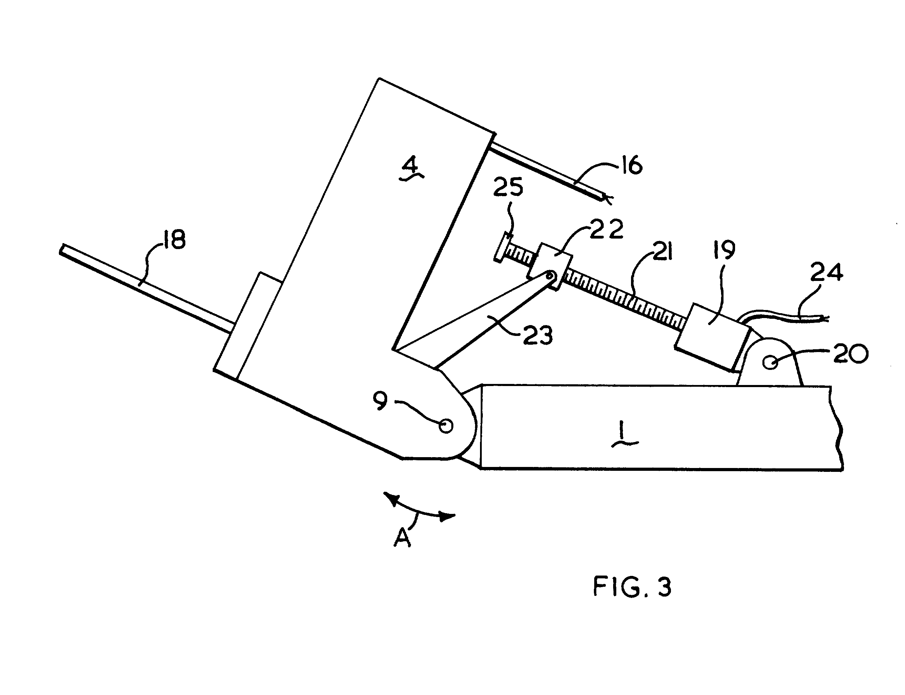

Figure 3 shows an alternative pivoting mechanism to that of the sliding handle (6), the catch (11), the holes (10) in the elongate body (1) and the two metal bars (7, 8). The pivoting mechanism comprises a second electric motor (19) which is pivotally mounted about a point (20) to the elongate rod (1). The electric motor (19) is capable of driving rotatingly a threaded shaft (21). Mounted on the threaded shaft (21) is a threaded nut (22) which co-operates with the threaded shaft (21). The threaded nut (22) is pivotally attached to the end of a metal bar (23) which is rigidly fixed to and projects from the electric motor (4). The metal bar (23) prevents the threaded nut (22) from rotating. Therefore, when the threaded shaft (21) rotates, the threaded nut (22) slides axially along the shaft (21). As the nut (22) slides along the shaft (21), the end of the metal bar (23) moves either towards or away from the electric motor (19) depending on the direction of rotation of the threaded shaft (21). The electric motor (19) is electrically connected to the battery pack (2) via an electric cable (24) and a switch (not shown). The switch enables a user to activate the motor (19) so that it can rotate in either direction thereby enabling the angle of pivot to be increased or decreased. A stop (25) is attached to the end of the threaded shaft (21) to prevent the threaded nut (22) from falling off the shaft (21).

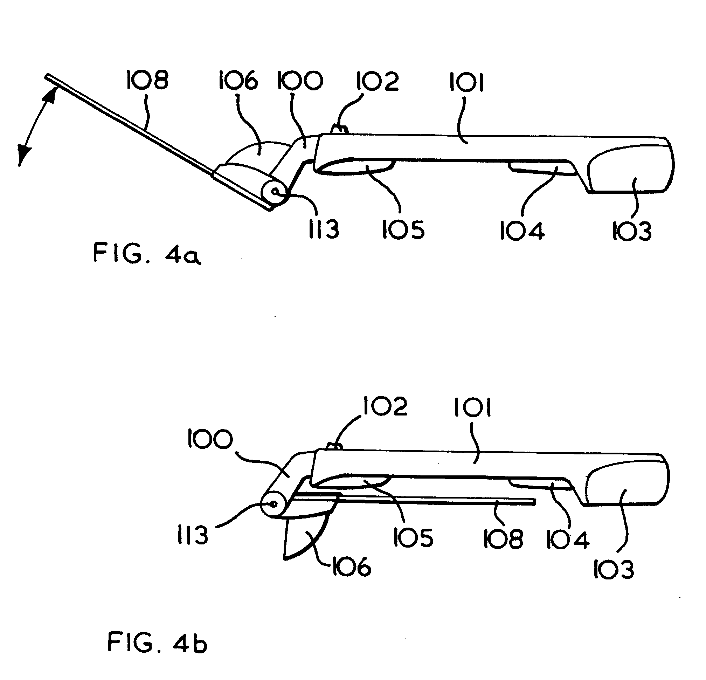

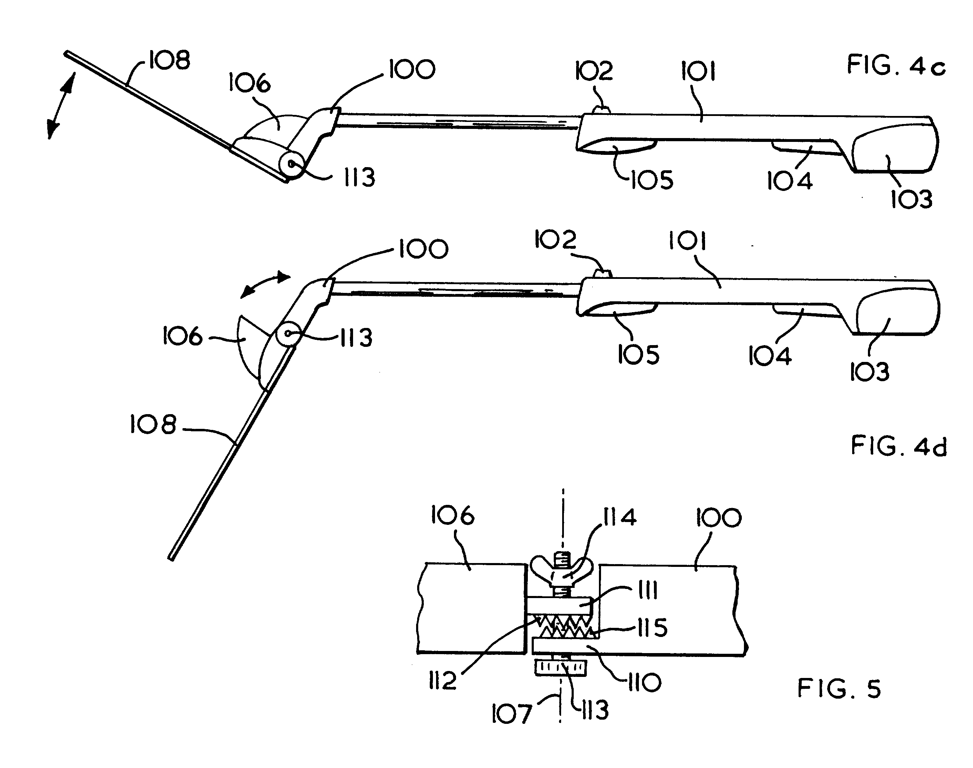

Figure 4a to 4d show a second embodiment of the present invention. In the second embodiment, the hedge trimmer comprises a telescopic elongate rod which comprises two parts (100, 101). The two parts (100, 101) are arranged so that the first part (100) is able to axially slide into and out of the second part (101). Locking means (not shown) are provided to releasably lock the first part (100) to the second part (101) and thus prevent relative movement between the two. A locking switch (102) is provided which, when depressed, releases the locking means and allows the first part (100) to slide within the second part (101). Figures 4a and 4b show the first part (100) located within the second part (101). Figures 4c and 4d show the first part (100) fully extended from the second part (101).

Attached to the end of the second part (101) of the elongate rod is a battery pack (103). A trigger switch (104) is attached to the second part (101) of the elongate rod next to the battery pack (103) so that a user can depress it with a finger whilst holding the elongate rod with that hand. A grip (105) is attached to the other end of the second part (101) of the elongate rod to enable a user to support the elongate rod with the other hand. The grip (105) is located near to the locking switch (102) so, whilst supporting the elongate member by the grip (105), a user is able to depress the locking switch (102) without removing their hand from the grip (105).

At the other end of the elongate rod to the battery pack (103) there is provided an electric motor (106) which is attached pivotally about an axis (107) to the end (110) of the first part (100) of the elongate rod. See Figure 5.

Attached to the electric motor (106) are a pair blades (108), one of which is reciprocatingly driven via a system of gears by the electric motor (106) in a known fashion. Figures 4a to 4d show the electric motor (106) and blades in a range of angles of pivot relative to the elongate rod. Figure 4b shows the blades (108) in a folded back position alongside the elongate rod. The electric motor (106) pivots about a bolt (113) which passes through the end (110) of the first part (100) of the elongate rod. See Figure 5. A rigid protrusion (111) projects from the rear of the electric motor (106). On one side of the protrusion (111) are arranged in an annulus a plurality of rigid fixed teeth (112). On the end (110) of the elongate rod are a similar set of annularly arranged rigid fixed teeth (115) which co-operate with those on the protrusion (111). A wing nut (114) is screwed onto the end of the bolt (113). When the wing nut (114) and bolt (113) are slackened off by unscrewing the wing nut (114) the protrusion (111) is allowed to slide axially along the bolt (113) away from the end (110) of the elongate body and thereby able to freely rotate around the bolt (113). When the wing nut (114) is screwed tightly onto the bolt (113), it squeezes the protrusion (111) against the end (110) of the elongate rod resulting in the teeth on the protrusion (111) engaging with the teeth (115) on the end (110) of the elongate rod. Thus the protrusion (111), and hence the electric motor (106) and blades (108) are prevented from pivoting relative to the elongate body.

The electric motor (106) is in electrical contact with the battery pack (103) via an electrical cable (not shown) and the trigger switch (104). Depression of the trigger switch (104) electrically connects the battery pack (103) to the electric motor (106) thus activating it to reciprocatingly drive the blades (108).

In use, the operator would first slacken off the wing nut and adjust the electric motor (106) and the blades (108) to the desired angle of pivot relative to the elongate member part (100). The operator would then tighten the wing nut (114) up to lock the electric motor (106) and blades (108) at the selected angle. The operator would then alter the amount of extension of the first part (100) of elongate rod by depression of the locking switch (102) and adjust the amount by which the first part extends. The operator would then release the locking switch. The operator would then support the hedge trimmer by holding the second part (101) of elongate body by the grip (105) with one hand and around the trigger (104) with the other. The operator would then activate the electric motor to reciprocatingly drive the blades by depression of the trigger switch (104).

Though the example provided relates to a hedge trimmer, it will be clear to the reader that by changing the types of blades and the way in which the electric motor drives them, the embodiments of the present invention can be adapted to cover a range of tools such as cutters and shearers.

## Claims

1. A hand held battery powered tool for cutting vegetation characterised in that the cutting tool comprises:
- an elongate rod (1; 100, 101);
- a battery pack (2; 103) attachable to one end of the elongate rod (1; 100, 101);
- an electric motor (4; 106) pivotally attached to the other end of the elongate rod (1; 100, 101) which motor (4; 106) is in electrical contact with the battery pack (2; 103); and
- at least one cutting blade (18; 108) which extends from and is driven by the motor (4; 106).

2. A hand held battery powered cutting tool as claimed in claim 1 characterised in that the motor (4; 106) drives at least one hedge trimmer blade (18; 108) in a reciprocating movement.

3. A hand held battery powered cutting tool according to claims 1 or 2 characterised in that the axis (9) of pivot of the electrical motor (4; 106) is parallel to the plane of the blade (18; 108).

4. A hand held battery powered cutting tool according to any one of the preceding claims characterised in that the weight of the battery pack (2; 103) at one end of the rod (1; 100, 101) acts to counterbalance the weight of the electrical motor (4; 106) and the blades (18; 108) at the other end of the rod (1; 100, 101) when the cutting tool is held by a user.

5. A hand held battery powered cutting tool according to any one of the preceding claims characterised in that there is further provided at least one support handle (3) for a user to support the cutting tool which is located in the neighbourhood of the centre of gravity of the cutting tool, so that a user supports the cutting tool at its centre of gravity.

6. A hand held battery powered cutting tool according to any of the preceding claims characterised in that the electric motor (4; 106) is pivotally mounted about a bolt (113), which bolt (113) is attached to the end of the elongate rod (1; 100, 101) so that the pivotal motion of the electric motor (4; 106) is hindered by the action of tightening a nut (114) which is screw threaded onto the bolt (113).

7. A hand held battery powered cutting tool according to any one of claims 1 to 5 characterised in that there is further provided a mechanical linkage (7, 8) between the electric motor (4) and a handle (6) located on the elongate rod (1) and configured so that the pivotal motion of the electric motor (4) is dependent upon the movement of the handle (6).

8. A hand held battery powered cutting tool according to claim 7 characterised in that the handle (6) is axially slidable along the elongate rod (1) and configured so that the pivotal motion of the electric motor (4) is dependent upon the sliding movement of the handle (6).

9. A hand held battery powered cutting tool according to any one of claims 1 to 5 characterised in that the pivotal motion of the electric motor (4) relative to the rod (1) is controlled by a second electric motor (19).

10. A hand held battery powered cutting tool according to any one of the preceding claims characterised in that the elongate rod (1; 100, 101) is telescopic.

11. A hand held battery powered cutting tool according to any one of the previous claims characterised in that the motor (4; 106) is capable of pivoting to a position where the blade (18; 108) is located in a folded back position alongside the elongate rod (1; 100, 101).

12. A hand held battery powered cutting tool according to Claim 11 characterised in that the blade (18; 108) is a hedge trimmer blade wherein when the blade (18; 108) is located in a folded back position, the blade (18; 108) is substantially parallel to the elongate rod (1; 100, 101).

13. A hand held battery powered tool for cutting vegetation characterised in that the cutting tool comprises an elongate rod (1; 100, 101), an electric motor (4; 106) pivotally attached to one end of the elongate rod (1; 100, 101), at least one cutting blade (18; 108) which extends from and is driven by the motor (4; 106), wherein the motor (4; 106) is capable of pivoting to a position where the blade (18; 108) is located in a folded back position alongside the elongate rod (1; 100, 101).

14. A hand held battery powered cutting tool as claimed in Claim 13 characterised in that the motor (4; 106) drives at least one hedge trimmer blade (18; 108) in a reciprocating movement.

15. A hand held battery powered cutting tool according to Claim 14 characterised in that the hedge trimmer blade is substantially parallel to the elongate rod (1; 100, 101) when located in the folded back position.

16. A hand held battery powered cutting tool according to either of Claims 13, 14 or 15 characterised in that the axis (9) of pivot of the electrical motor (4; 106) is parallel to the plane of the blade (18; 108).

17. A hand held battery powered cutting tool according to any one of Claims 13 to 16 characterised in that the electric motor (4; 106) is pivotally mounted about a bolt (113), which bolt is attached to the end of the elongate rod (1; 100, 101) so that the pivotal motion of the electric motor (4; 106) is hindered by the action of tightening a nut (114) which is screw threaded onto the bolt (113).

18. A hand held battery powered cutting tool according to any one of Claims 13 to 16 characterised in that there is further provided a mechanical linkage (7, 8) between the electric motor (4) and a handle (6) located on the elongate rod (1) and configured so that the pivotal motion of the electric motor (4) is dependent upon the movement of the handle (6).

19. A hand held battery powered cutting tool according to Claim 18 characterised in that the handle (6) is axially slidable along the elongate rod (1) and configured so that the pivotal motion of the electric motor (4) is dependent upon the sliding movement of the handle (6).

20. A hand held battery powered cutting tool according to any one of Claims 13 to 16 characterised in that the pivotal motion of the electric motor (4) relative to the rod (1) is controlled by a second electric motor (19).

21. A hand held battery powered cutting tool according to any one of Claims 13 to 20 characterised in that the elongate rod (1; 100, 101) is telescopic.
